(19)

Europäisches Patentamt

European Patent Office

Office européen des brevets

(11) **EP 2 709 063 A1**

(12) **EUROPEAN PATENT APPLICATION**

(43) Date of publication:
**19.03.2014 Bulletin 2014/12**

(51) Int Cl.:
***G06T 7/00*** (2006.01)

(21) Application number: **13183786.6**

(22) Date of filing: **10.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2012 JP 2012201971**

(71) Applicant: **Omron Corporation**
**Kyoto-shi, Kyoto 600-8530 (JP)**

(72) Inventors:
- **Ruan, Xing**
  **Kyoto 600-8530, (JP)**
- **Chen, Lin**
  **XuHui District**
  **Shanghai, 200235 (CN)**
- **Yang, Ming-Hsuan**
  **Merced, CA 95343 (US)**

(74) Representative: **Horn Kleimann Waitzhofer**
**Elsenheimerstraße 65**
**DE-80687 München (DE)**

(54) **Image processing device, computer-readable recording medium, and image processing method**

(57)     Disclosed are an image processing device, an image processing method, and a non-transitory computer-readable medium that obtain a contour image in which noise edges are eliminated from local edge information and a contour of an important object is enhanced. The image processing device includes a local contour extraction unit which generates a local edge image and a global contour extraction unit which generates a global edge image. The image processing device generates a contour image by preparing the local edge image and obtaining the weighting sum of the local edge image and the global edge image.

FIG. 7

**Description**

TECHNICAL FIELD

The present invention relates to an image processing device, an image processing program, a computer-readable recording medium storing the image processing program, and an image processing method, all of which generate a contour image showing the contour of an object within an input image.

BACKGROUND OF THE INVENTION

Conventionally, in the field of image processing, a technology which extracts the contour of an object within an image is known. Many conventional contour extraction technologies are included in the following categories: a method of extracting the contour of an object by detecting an edge based on local contrast information of an image (a method of calculating a direction and an intensity of an edge (Japanese Unexamined Patent Publication No. 2000-11188, published as of January 14, 2000); a method of performing a contour extraction process on arbitrary density values of adjacent pixels (Japanese Unexamined Patent Publication No. 2000-76468, published as of March 14, 2000); a method of determining an edge portion and a non-edge portion in two steps (Japanese Unexamined Patent Publication No. 2007-318408, published as of December 6, 2007); and a method of determining edge intensities of pixels on a predetermined scanning line (Japanese Unexamined Patent Publication No. 2008-205603, published as of September 4, 2008). In these technologies, various techniques are proposed to define "contrast".

Additionally, so-called edge grouping technology is also conventionally known. In the edge grouping technology, as many edges as possible are detected based on local contrast information, a correlation between the detected edges is drawn, edges with a low correlation are removed, and edges with a high correlation are connected. In this way, finally the contour is extracted. For example, there is also a proposed technology which extracts the contour by detecting a line segment extending in a determined direction and enhancing or eliminating the detected line segment according to continuity in the predetermined direction and/or intensity (Japanese Unexamined Patent Publication No. 5-307537, published as of November 19, 1993).

However, in the conventional technologies, only local contrast information is used for edge detection, and it is not taken into consideration whether a region (pixel) as a target of the edge detection process is an important region (pixel) among regions of the whole image in terms of human being's vision characteristics.

Therefore, there are cases where an edge of a region was detected only based on the local contrast information, in spite of the fact that the region is not important in terms of human being's vision characteristics (that is, the fact that a salient object is not included in the region). For this reason, the conventional technologies are unlikely to exhibit sufficient accuracy in an edge detection process and a contour extraction process.

SUMMARY

In accordance with one aspect of at least one embodiment of the invention, there is provided an image processing device for generating a contour image showing a contour of an object shown in an input image, the image processing device comprising: a local edge image generator configured to generate a local edge image showing a local edge of the object in the input image based on contrast between a region in the input image and a region adjacent to the region; a saliency edge image generator configured to generate a contrast map image showing a salient region within the input image and generate a saliency edge image showing an edge included in the generated contrast map image; and a contour image generator configured to generate the contour image by combining the local edge image and the saliency edge image.

In accordance with another aspect of at least one embodiment of the invention, there is provided a non-transitory computer-readable medium, having stored thereon computer-readable instructions for executing, by a computer, an image processing method for generating a contour image showing a contour of an object shown in an input image, the image processing method comprising:

generating a local edge image showing a local edge of the input image based on contrast between a region in the input image and an adjacent region of the region; generating a contrast map image showing a salient region within the input image and generating a saliency edge image showing an edge included in the generated contrast map image; and generating the contour image by combining the local edge image and the saliency edge image.

In accordance with yet another aspect of at least one embodiment of the invention, there is provided an image processing method for generating a contour image showing a contour of an object shown in an input image, the image processing method comprising:

generating a local edge image showing a local edge of the object in the input image based on contrast between a region in the input image and a region adjacent to the region;

generating a contrast map image showing a salient region within the input image and generating a saliency edge image showing an edge included in the generated contrast map image; and generating the contour image by combining the local edge image and the saliency edge image.

BRIEF DESCRIPTION OF THE DRAWINGS

Fig. 1 is a functional block diagram illustrating an example of a schematic configuration of an image processing device according to one embodiment of the present invention;

Fig. 2 is a functional block diagram illustrating an example of a configuration of a saliency map image generation unit included in the image processing device;

Figs. 3A and 3B are pictures illustrating examples of an image processed by the saliency map image generation unit; Fig. 3A illustrates an input image which is input to the saliency map image generation unit, and Fig. 3B illustrates a saliency map image which is its output;

Figs. 4A, 4B, and 4C are pictures illustrating other examples of an image processed by the saliency map image generation unit;

Fig. 5 illustrates an input image in which an edge portion is included in a certain section, and an enlarged view of the division;

Figs. 6A and 6B illustrate statistical information of an left side region and statistical information of a right side region of the section, respectively; Fig. 6A is a graph (histogram) in which the horizontal axis indicates a numerical value which represents the color of each pixel in the left side region and the vertical axis indicates a frequency of the numerical value; Fig. 6B is a graph (histogram) in which the horizontal axis indicates a numerical value which represents the color of each pixel in the right side region and the vertical axis indicates a frequency of the numerical value;

Fig. 7 is a flowchart illustrating the flow of the contour extraction process performed in the image processing device;

Fig. 8 is a functional block diagram illustrating a schematic configuration of an image processing device according to one modification;

Fig. 9 is a diagram illustrating the flow of image map data obtained through each procedure included in a contour extraction process executed by the image processing device according to the modification;

Fig. 10 is a diagram illustrating a process in which the image processing device according to the modification generates a global contour from an input image, in detail;

Fig. 11 is a diagram illustrating a process in which the image processing device according to the modification generates a local contour from the input image; and

Fig. 12 is a diagram illustrating the flow of sub-processes executed by each color image processing unit for respective color channels included in the image processing device according to the modification.

DETAILED DESCRIPTION

Embodiments ofthe present invention aim to solve the problems as described above, and provide an image processing device that eliminates noise edges from local edge information and thus obtains a contour image in which a contour of an important object is enhanced.

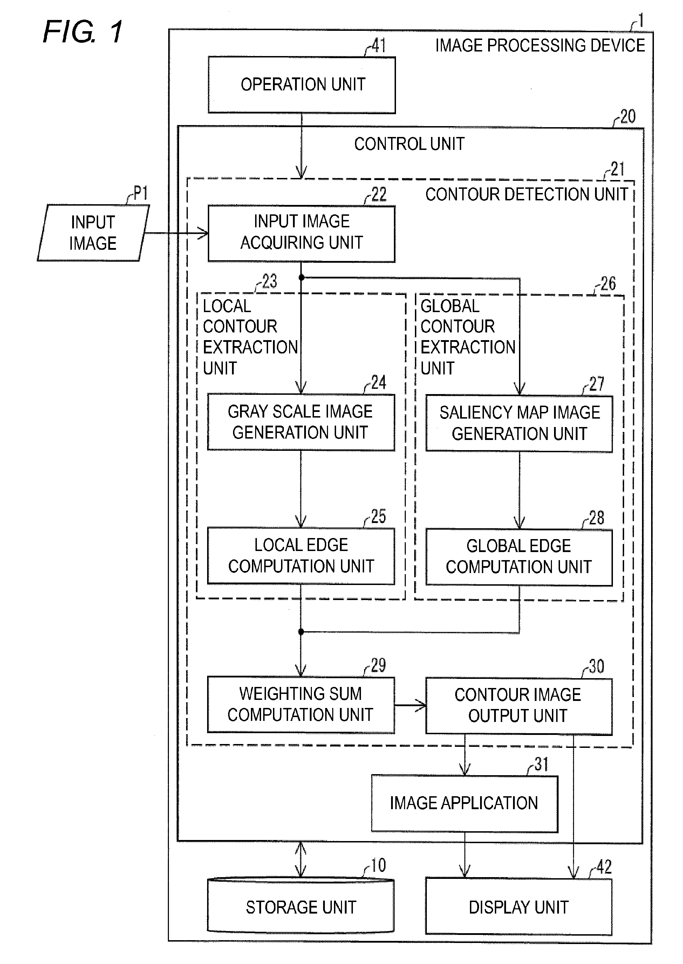

One embodiment ofthe present invention is described with reference to Figs. 1 to 12. First, an image processing device 1 according to the present embodiment is described with reference to Fig. 1.

The image processing device 1 illustrated in Fig. 1 acquires an input image P1, extracts the contour of an object in the input image P1 based on the acquired input image P1, and outputs the extraction result. The input image P1 may be a still image or a moving image.

As illustrated in Fig. 1, the image processing device 1 includes a storage unit 10, a control unit 20, an operation unit 41, and a display unit 42.

The storage unit 10 stores various kinds of data and programs. The storage unit 10 is implemented by a combination of storage devices, such as a ROM (Read Only Memory), a RAM (Random Access Memory), and a nonvolatile memory (for example, flash memory). In the storage unit 10, for example, a program which is executed by the control unit 20, various kinds of data processed in the program, etc. are stored.

The control unit 20 collectively controls various functions provided in the image processing device 1. The control function of the control unit 20 is implemented in a manner that a processing device, for example, a CPU (Central Processing Unit), executes a control program. For example, the control unit 20 has a function of executing a contour extraction process which receives the input image P1 as an input. A configuration for the control unit 20 to perform the contour extraction process is described below.

The operation unit 41 receives various kinds of inputs from a user, and can be implemented by using an input device, for example, a button for input, a keyboard, a ten key, a pointing device such as a mouse, and a touch panel, etc. The operation unit 41 generates operation data according to a user's operation received, and transmits the generated operation data to the control unit 20.

The display unit 42 performs a screen display to provide various kinds of information to a user. The display unit 42 displays various kinds of information, such as characters, images, etc., on a display screen, based on the image data that the display unit 42 receives from the control unit 20. The display unit 42 is implemented by using a display device, such as an LCD (Liquid Crystal Display), a PDP (Plasma Display Panel), and an organic EL (Electroluminescence) display. The result of execution of the contour extraction process performed by the control unit 20 is displayed on the display unit 42, for example.

(Regarding Details of Control Unit)

Next, the details of the control unit 20 are further described with reference to Fig. 1. As illustrated in Fig. 1, the control unit 20 includes a contour detection unit 21 and an image application 31.

The contour detection unit 21 has a function for implementing the contour extraction process.

The image application 31 performs further image processing using the execution result of the contour extraction process executed by the contour detection unit 21. The image application 31 has a function of detecting and identifying an object by performing pattern recognition using the contour extraction result, for example.

More specifically, the image application 31 may be configured to identify the object constituting the contour from among a face, a person, a landmark, a character, and other objects.

When a person is included in the input image P1, the image application 31 may be configured to perform a collation process and an authentication process of the detected person by performing further image processing.

(Details of Contour Detection Unit)

Next, the details of the contour detection unit 21 are further described with reference to Fig. 1. As illustrated in Fig. 1, more specifically the contour detection unit 21 includes an input image acquiring unit 22, a local contour extraction unit 23 (or known as local edge image generator), a global contour extraction unit 26 (or known as saliency edge image generator), a weighting sum calculation unit 29 (or known as contour image generator), and a contour image output unit 30.

The input image acquiring unit 22 acquires the input image P1 which is a color image. Illustratively, the input image acquiring unit 22 acquires the input image P1 in real time (synchronously) or asynchronously from an imaging device, such as a digital camera or a digital video camera, connected to the image processing device 1 according to the operation which is input to the operation unit 41. However, a supply source of the input image P1 is not particularly limited. For example, the input image acquiring unit 22 may acquire the image data stored in the storage unit 10 as the input image P1, may acquire the input image P1 from a peripheral device connected to the image processing device 1, or may acquire the input image P1 via a wired or wireless communication network.

The local contour extraction unit 23 extracts the contour of an object in the input image P1 according to a local image characteristic of the input image P1. More specifically, the local contour extraction unit 23 includes a gray scale image generation unit 24 and a local edge computation unit 25.

The gray scale image generation unit 24 extracts gray scale information from the input image P1, and generates a gray scale image based on the extracted gray scale information. The extraction of the gray scale information may be achieved, for example, by computing an average value of RGB from a color space, or by configuring an image of one channel (for example, R) in the color space.

The local edge computation unit 25 generates a local edge image by performing contrast computation (edge computation) using the local contrast information of the gray scale image generated by the gray scale image generation unit 24. The details of the contrast computation of the local edge computation unit 25 are described below.

The global contour extraction unit 26 extracts the contour of an object in the input image P1 according to a global image characteristic of the input image P1. More specifically, the global contour extraction unit 26 includes a saliency map image generation unit 27 and a global edge computation unit 28.

The saliency map image generation unit 27 calculates saliency which is a degree by which a human being would visually pay attention to each region of the input image P1, and generates a saliency map image (contrast map) based on the calculated saliency.

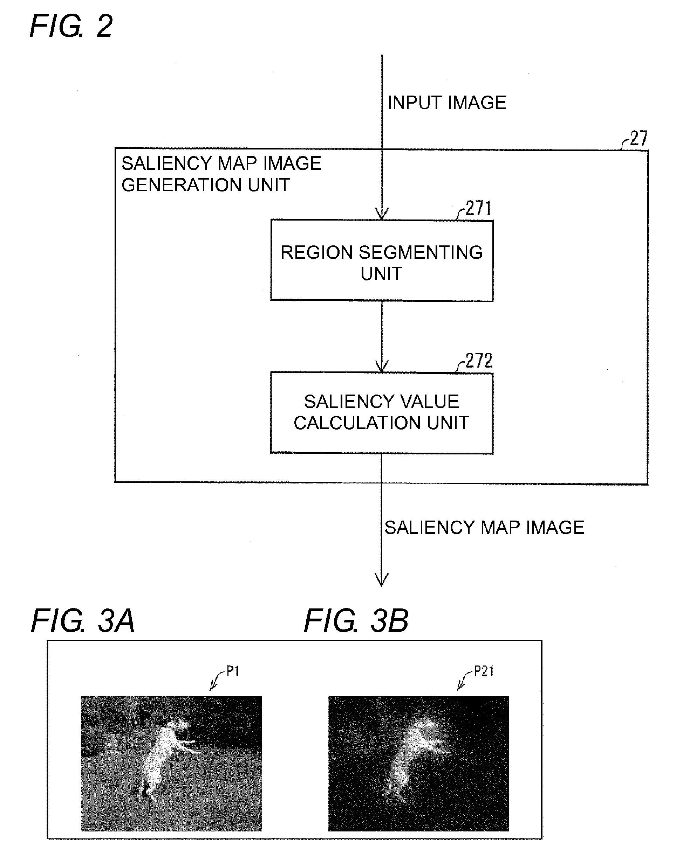

Illustratively, the saliency map image generation unit 27 generates a saliency map image P21 illustrated in Fig. 3B, from the input image P1 illustrated in Fig. 3A. A dog is found in the input image P1 illustrated in Fig. 3A.

From the viewpoint of the saliency, the dog in the input image P1 is a salient object within the whole input image P1. The saliency map image generation unit 27 calculates the saliency of a region which includes the salient object therein and performs mapping between image regions and their saliency. For example, in the saliency map image P21 illustrated in Fig. 3B, a region with a higher saliency looks lighter and a region with a lower saliency looks darker. How the saliency map image generation unit 27 generates the saliency map image is described below in detail.

The global edge computation unit 28 generates a global edge image by performing contrast computation (edge computation) using global image information shown by the saliency map image generated by the saliency map image generation unit 27. The details of the contrast computation of the global edge computation unit 28 are described below.

The weighting sum calculation unit 29 calculates a weighting sum of the local edge image generated by the local contour extraction unit 23 and the global edge image generated by the global contour extraction unit 26, and finally generates a contour image. Hereinbelow, the finally generated contour image is called a final contour image. Arbitrary weighting factors can be used in the computation of the weighting sum by the weighting sum calculation unit 29. For example, the weighting factor for the local edge image may be smaller than the weighting factor for the global edge image, or may be larger conversely.

The total of the weighting factors may be 1, may be larger than 1 or may be smaller than 1. Some processes described below also use weighting factors, and the above conditions are also applied to those factors.

The contour image output unit 30 outputs the final contour image generated by the weighting sum calculation unit 29 to a predetermined place. For example, the contour image output unit 30 can output the final contour image to the display unit 42, or can output it to the image application. The contour image output unit 30 may store the final contour image in the storage unit 10.

(Regarding Detailed Configuration of Saliency Map Image Generation Unit)

Next, the detailed configuration of the saliency map image generation unit 27 is described with reference to Fig. 2. Fig. 2 is a functional block diagram illustrating a functional configuration of the saliency map image generation unit 27.

As illustrated in Fig. 2, the saliency map image generation unit 27 includes a region segmenting unit 271 and a saliency value calculation unit 272.

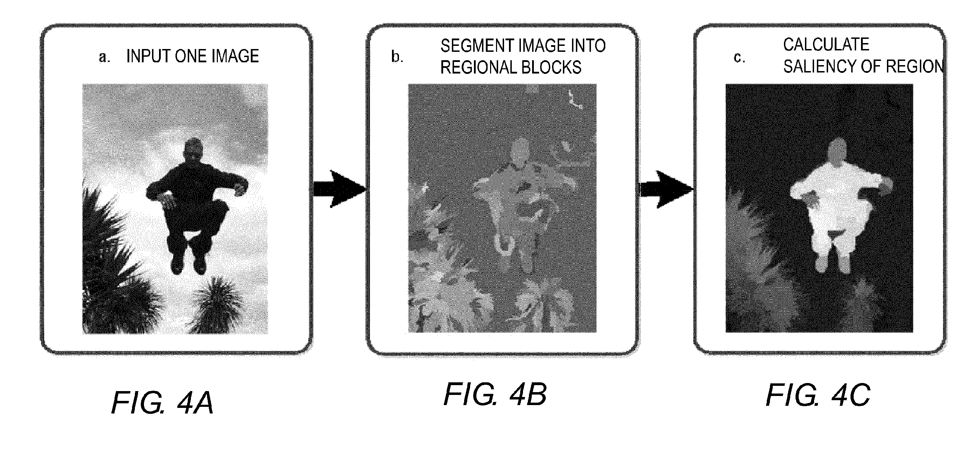

The region segmenting unit 271 segments the input image P1 (for example, an image illustrated in Fig. 4A) into a plurality of regions using an arbitrary image automatic segmentation algorithm. As the automatic segmentation algorithm for automatically segmenting the input image P1, for example, a method, disclosed in Non-patent Literature ("Efficient graph-based image segmentation" (IJCV, 59(2):167-181, 2004, proposed by Felzenszwalb and Huttenlocher) can be adopted. It is appreciated that algorithm usage is not limited to this automatic segmentation algorithm, other existing image automatic segmentation algorithms may be used as well. Although not illustrated, the region segmenting unit 271 supplies segmentation information which is information showing how the input image P1 is segmented to the local edge computation unit 25 and the global edge computation unit 28.

For the input image (for example, an image illustrated in Fig. 4B) which is segmented into a plurality of regions according to the image automatic segmentation algorithm by the region segmenting unit 271, the saliency value calculation unit 272 calculates the weighting sum of differences in color between one region and the other regions, and thus calculates (detects) a saliency value of the corresponding region for every segmented region. When the saliency value calculation unit 272 finishes calculation of each saliency value for all the regions, the saliency of the image illustrated in Fig. 4C can be obtained. The saliency value calculation unit 272 generates the saliency map image based on the saliency values of the image which are acquired in this way and supplies the generated saliency map image to the global edge computation unit 28.

As described above, according to the image processing device 1, the saliency value of image pixels can be promptly and effectively analyzed. According to the image processing device 1, an image of nature which is complicated and changes diversely can be effectively analyzed, and the requirements for processing performance required in real time processing can be satisfied.

In the image processing device 1, a saliency $S(r_k)$ of a region $r_k$ within the plurality of segmented regions (1, 2, ... $k$, ..., $m$) is defined as the following Expression 1.

[Expression 1]

$$S(r_k) = \sum_{r_k \neq r_i} \exp\left(-\frac{D_s(r_k, r_i)}{\sigma_s^2}\right) w(r_i) D_c(r_k, r_i) \qquad \cdots (1)$$

In Expression 1, $D_s(r_k, r_i)$ and $D_c(r_k, r_i)$ represent a space distance between a region $r_k$ and a region $r_i$ and a

color difference between the region $r_k$ and the region $r_i$, respectively; $i$, $k$, and $m$ are natural numbers; $w(r_i)$ is a weighting value of the region $r_i$; and $\sigma_s^2$ is a distance element influence control parameter.

In the image processing device 1, the influence of a distance element is decreased as the distance element influence control parameter $\sigma_s^2$ is increased. Conversely, the influence of the distance element is increased as the distance element influence control parameter $\sigma_s^2$ is decreased. When the space coordinates of an image pixel are normalized to 0 to 1 (linearity zooming), the distance element influence control parameter $\sigma_s^2$ takes a value in the range of 0.01 or greater and 10 or less. Preferably, the distance element influence control parameter $\sigma_s^2$ is 0.1 or more and 1.0 or less. When $\sigma_s^2 = 0.4$, a remarkable image saliency detection (computation) efficiency can be acquired.

In the image processing device 1, the number of pixels included in the region $r_i$ may be used as a weighting value $w(r_i)$ of the region $r_i$.

In the image processing device 1, a differential $D_c(r_k, r_i)$ between the region $r_k$ and the region $r_i$ is defined as the following Expression 2.

[Expression 2]

$$D_c\left(r_k, r_i\right) = \sum_{i=1}^{n_1} \sum_{j=1}^{n_2} f\left(c_1, i\right) f\left(c_2, j\right) D\left(c_{1,i}, c_{2,j}\right) \qquad \cdots (2)$$

In Expression 2, $f(c_k, i)$ is a frequency of occurrences of an i-th color $c_k$ among $n_k$ colors included in the region $r_k$, $D(c_{1,i}, c_{2,j})$ is a Euclidean distance in a color space of two colors $c_{1,i}$, $c_{2,j}$, and $k = \{1, 2\}$.

In the saliency value calculation unit 272, the saliency value can be computed in color of 2 bits or more and 256 bits or less for every color channel. As the number of bits (levels) of the adopted color is decreased, the amount of computation is decreased but accuracy worsens. As the number of bits (levels) of the adopted color is increased, the amount of computation is increased but accuracy improves.

Full color (256-bit color) for each color channel may not be adopted. For the purpose of accelerating the computation, for example, preferably approximation may be performed with color of 8 bits or more and 128 bits or less for each color channel.

When approximation is performed with 12 bits of colors for each color channel, a remarkable advantage can be achieved. That is, the amount of computation can be substantially reduced, securing the accuracy of the saliency of the image detected.

The detailed configuration of the saliency map image generation unit 27 has been described so far but the configuration is not limited to the description. In the saliency map image generation unit 27, arbitrary saliency map image generation techniques are employable.

(Contrast Computation)

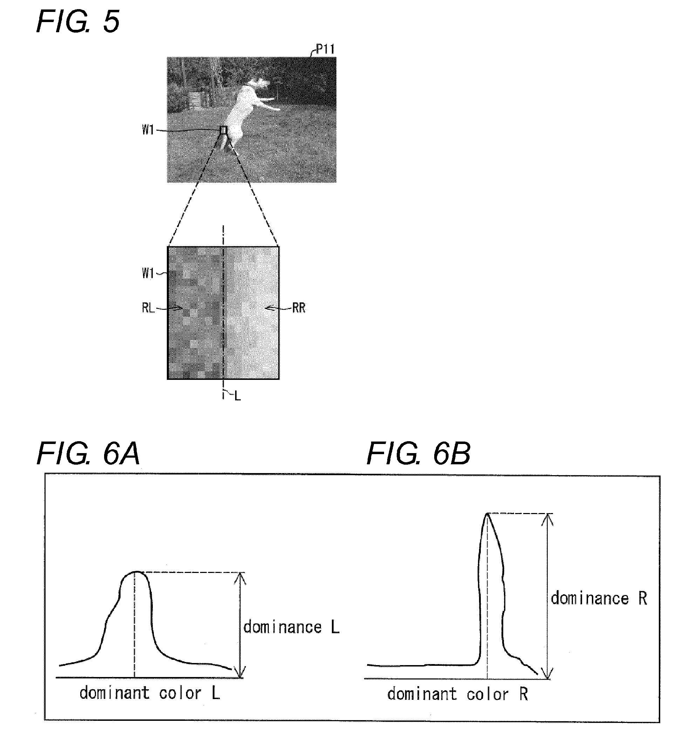

Next, the contrast computation (edge computation) performed by the local edge computation unit 25 and the global edge computation unit 28 is described with reference to Figs. 5 and 6.

Fig. 5 illustrates the input image P1 in which an edge portion is included in a section W1, and also illustrates an enlarged view of the section W1. The section W1 illustrated in Fig. 5 is just an example for helping understanding of the invention. Accordingly, in the illustration, neither matching of the numbers of pixels nor the positions of the pixels between the input image P1 and the enlarged view of the section W1 are not considered in a strict sense. How to determine the size of the section W1 and the position of the section W1 in the input image P1 is arbitrary.

The image used as an input when the local edge computation unit 25 performs the contrast computation is a gray scale image, and the image used as an input when the global edge computation unit 28 performs the contrast computation is the saliency map image P21.

The contrast computation of the global edge computation unit 28 is described below.

The global edge computation unit 28 segments the saliency map image P21 using the segmentation information supplied from the region segmenting unit 271 in the same unit as the unit used in the segmentation of the input image P1 which is performed by the region segmenting unit 271. The global edge computation unit 28 performs the contrast computation, in a predetermined order, on each of the plurality of regions produced by segmenting the saliency map image P21. The region as a computation target to undergo the contrast computation is referred to as an observation region below.

An example of detecting an edge extending in the vertical direction within the section W1 is described with reference to Figs. 5 and 6 below.

The section W1 illustrated in Fig. 5 is assumed to be the observation region. Here, the global edge computation unit 28 segments the section W1 serving as the observation region into a right region RR and a left region RL using a vertical (perpendicular) line L as a boundary. The global edge computation unit 28 can arbitrarily segment the section W1 into the right region RR and the left region RL. Illustratively, the global edge computation unit 28 equally segments the section W1 into the right region RR and the left region RL.

The global edge computation unit 28 calculates a dominant color and a dominance of the dominant color for each region of the right region RR and the left region RL by computing statistics of colors of pixels included in each of the right region RR and the left region RL.

It is described in greater detail with reference to Fig. 6. Fig. 6A is a graph (histogram) for the left region RL in which the horizontal axis indicates a numerical value which represents the color of each pixel and the vertical axis indicates a frequency of occurrences of each color. Fig. 6B is a graph (histogram) for the right region RR in which the horizontal axis indicates a numerical value which represents the color of each pixel and the vertical axis indicates a frequency of occurrences of each color.

Here, the color represented by a numerical value which most frequently occurs among the colors represented by numerical values indicated in the horizontal axis is referred to as a dominant color. The numerical value representing a color expresses a color in a color space, and may be a value of a certain channel, for example, in a $YC_bC_r$ color space (expression of a color by luminosity and a color difference components). The numerical value representing a color may express the value of a certain channel in the RGB color space, for example.

The numerical value representing a color may express the value of a complex channel into which a plurality of channels in a color space are combined. For example, it may express the value of a complex channel into which 2 or 3 channels among R, G, B channels are combined, in the expression of the RGB color space.

The global edge computation unit 28 calculates the score of an edge by performing the contrast computation according to the following Standard 1 and Standard 2.

Standard 1: as a difference in dominant color between two regions of the right region RR and the left region RL is increased, a possibility that the section W1 includes an edge (contour) along the vertical direction is increased.

Standard 2: in each of the right region RR and the left region RL, as the colors approximate one color, a possibility that the section W1 includes the edge (contour) along the vertical direction is increased.

The global edge computation unit 28 calculates the score of an edge from Expression 3 which represents the following Standard 1 and Standard 2.

$$(\text{dominant color L - dominant color R) * dominance L * dominance R} \cdots (3)$$

In Expression 3, a term of "(dominant color L - dominant color R)" is a differential between the dominant color L of the left region RL and the dominant color R of the right region RR. This term is calculated to reflect the difference (namely, distance) in the dominant color in Standard 1, on the score of the edge. This distance is normalized so as to have a value in the range of 0 to 1, for example. For example, a distance between two colors which are most separated colors and in which one color is included in the left region RL and the other color is included in the right region RR is set to "1", and normalization is performed using this value as a reference value.

A term of "dominance L" and a term of "dominance R" represent a dominance of the dominant color in the left region RL and a dominance of the dominant color in the right region RR, respectively. These terms are calculated to reflect the dominance of one color described in Standard 2 in the score of the edge. That is, as the dominance L or the dominance R is increased, the color in the left region RL or the right region RR more closely approximates one color.

Illustratively, the dominance L and the dominance R each are normalized to have a value in the range of 0 to 1. For example, the ratio of the number of dominant colors to the number of pixels included in each region can be defined as the dominance of the dominant color.

The three terms described above may be used solely, or two or more terms among the three terms can also be used in combination. The score of the edge calculated from Expression 3 may be normalized to be a value in the range of 0 to 1.

The global edge computation unit 28 generates the global edge image in which the scores of the edges obtained using Expression 3 are mapped for the observation regions, respectively. In order to detect the horizontal edge within the section W1 serving as the observation region, the global edge computation unit 28 horizontally may segment the section W1 (into an upper region and a lower region), and may calculate the score of the edge according to Expression 3. That is, the global edge computation unit 28 may segment the section W1 into arbitrary two regions according to the direction of the edge to be detected, and may calculate the score of the edge according to Expression 3.

The global edge computation unit 28 may execute the contrast computation for every pixel. For example, the contrast computation may be performed by using a predetermined range including observation pixels, which are processing targets, as the section W1.

The local edge computation unit 25 may also adopt the same technique as the contrast computation technique (for example, the contrast computation techniques illustrated in Figs. 5 and 6) of the global edge computation unit 28. That is, the local edge computation unit 25 may generate the local edge image in which the scores obtained using Expression 3 are mapped.

In the following embodiment, an example in which the local edge computation unit 25 and the global edge computation unit 28 employ the same contrast computation technique as the one described above is described. However, the invention is not limited thereto, but a different contrast computation technique may be employed by the local edge computation unit 25 and the global edge computation unit 28. The local edge computation unit 25 and the global edge computation unit 28 may use a computation technique (for example, the conventional computation technique) other than the above-described contrast computation techniques.

(Flow of Face Image Registration Process)

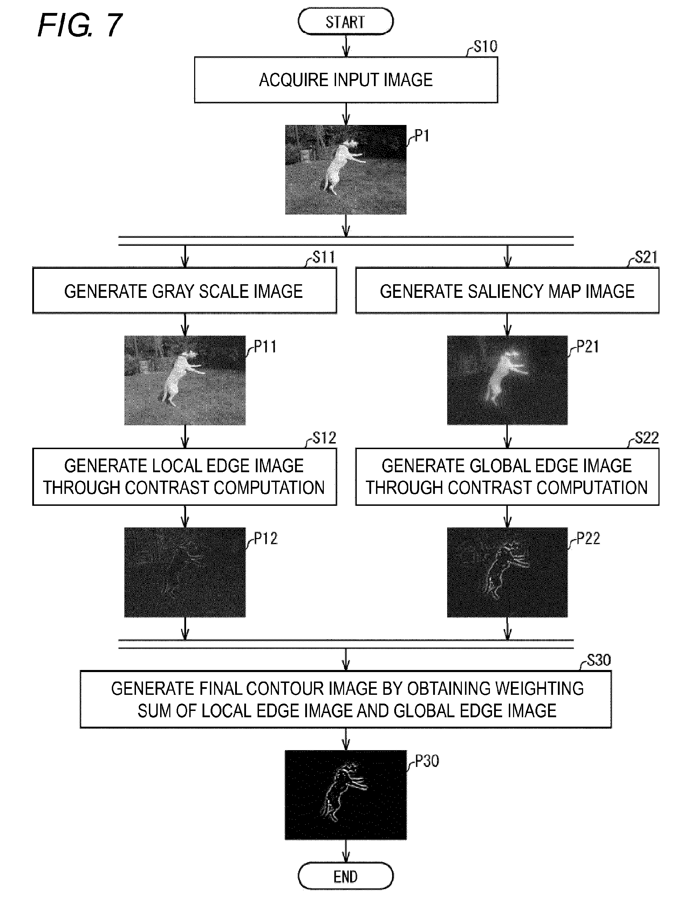

Next, an example of the flow of a contour extraction process performed by the image processing device 1 is described below with reference to Fig. 7. Fig. 7 is a flowchart illustrating the flow of the contour extraction process performed by the image processing device 1.

When the contour extraction process is started, the input image acquiring unit 22 acquires the input image P1 first in Step S10.

Subsequently, an edge image is generated by the local contour extraction unit 23 and the global contour extraction unit 26.

That is, in the local contour extraction unit 23, when the gray scale image generation unit 24 generates a gray scale image P11 in Step S11, the local edge computation unit 25 generates a local edge image P12 by performing the contrast computation which uses the generated gray scale image P11 in Step S12.

On the other hand, in the global contour extraction unit 26, when the saliency map image generation unit 27 generates a saliency map image P21 in Step S21, the global edge computation unit 28 generates a global edge image P22 (or known as saliency edge image) by performing the contrast computation which uses the generated saliency map image P21 in Step S22.

Processing of S11 and S12 and processing of S21 and S22 may be performed in parallel, or may be performed in series in a manner that either one is performed first and the other is performed later.

In Step S30, the weighting sum calculation unit 29 generates a final contour image P30 by using the weighting sum of the local edge image P12 generated by the local edge computation unit 25 and the global edge image P22 generated by the global edge computation unit 28. After that, the contour extraction process is ended.

(Operation and Effect)

As described above, the image processing device 1 according to the present embodiment is an image processing device 1 which generates the contour image P30 showing the contour of an object shown in the input image P1, and is configured to include the local edge computation unit 25 which generates the local edge image P12 showing the local edges of the input image P1, based on the contrast between pixels of the region contained in the input image P1 and the adjacent pixels, the global edge computation unit 28 which generates the global edge image P22 showing the edge in the saliency map image P21 by calculating the contrast between each region of the plurality of regions in the input image P1 and the entire input image and generating the saliency map image P21 of each region for the entire input image P1, and the weighting sum calculation unit 29 which generates the contour image P30 by combining the location edge images P12 and the global edge image P22 by making use of the weighting sum.

According to the above-described configuration, noise edges can be eliminated from the local edge information and the contour image in which the contour of an important object is enhanced can be obtained.

[Modification]

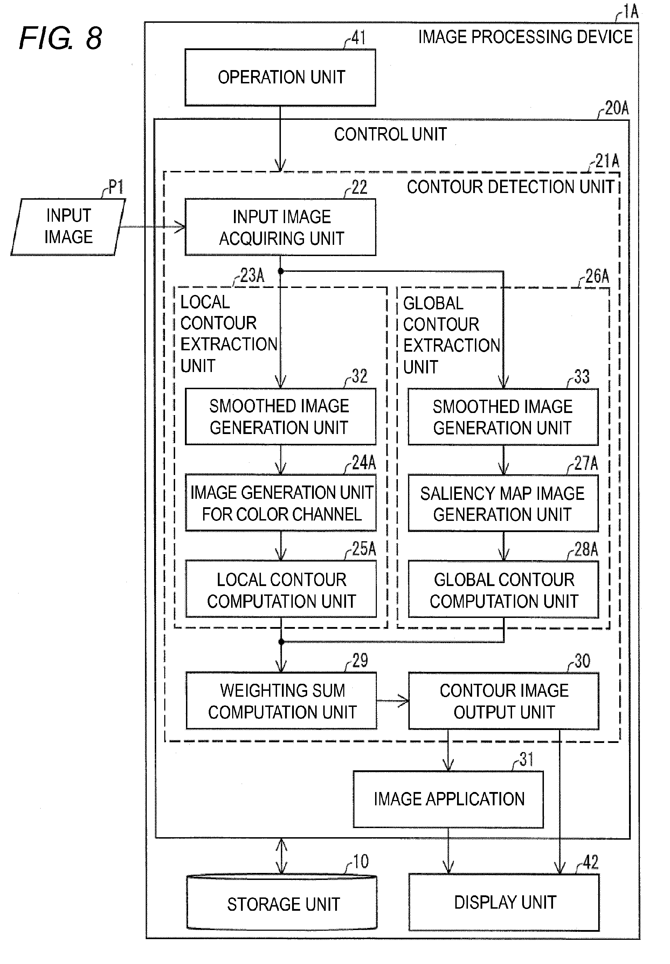

The preferred modification of the image processing device 1 according to the present invention is described below with reference to Figs. 8 to 11. An image processing device 1A according to the modification described below acquires a local contour and a global contour by using an image (hereinafter, referred to as a bilateral image) acquired by applying a bilateral filter which changes stepwise a degree of smoothness of the input image P1.

The bilateral filter is a filter for smoothing the image like a Gaussian filter. The Bilateral filter has the characteristic that portions other than edge can be smoothed and the portion of the edge in the image remains clear, while the Gaussian filter globally smoothes the image, including the portion of the edge in the image.

(Configuration of Image Processing Device According to Modification)

The configuration of the image processing device 1A according to the present modification is illustrated in Fig. 8. Hereinbelow, differences between the image processing device 1A illustrated in Fig. 8 and the image processing device 1 illustrated in Fig. 1 are described.

The image processing device 1A illustrated in Fig. 8 includes a local contour extraction unit 23A (or known as local edge image generator) and a global contour extraction unit 26A (or known as saliency edge image generator) which are modified from the local contour extraction unit 23 and the global contour extraction unit 26 provided in the image processing device 1 illustrated in Fig. 1.

The local contour extraction unit 23A is configured by adding a smoothed image generation unit 32 to the local contour extraction unit 23 and by changing the gray scale image generation unit 24 and the local edge computation unit 25 into image generation units 24A for respective color channels and a local contour calculation unit 25A.

The global contour extraction unit 26A is configured by adding a smoothed image generation unit 33 to the global contour extraction unit 26 and by changing the saliency map image generation unit 27 and the global edge computation unit 28 into a saliency map image generation unit 27A and a global contour calculation unit 28A.

Members having the same functions as in the image processing device 1 illustrated in Fig. 1 are denoted by the same reference signs. Since these members have been already described with reference to Fig. 1, a description thereof is not given again.

Different configurations between the image processing device 1A illustrated in Fig. 8 and the image processing device 1 illustrated in Fig. 1 are further described.

First, a description is made about the local contour extraction unit 23A. The smoothed image generation unit 32 acquires a plurality of bilateral images by applying a bilateral filter which changes stepwise the degree of smoothness of the input image P1.

For each of the plurality of bilateral images generated by the local contour extraction unit 23A, the image generation unit 24A for each color channel generates a contour map for each color channel, and generates the contour map of the bilateral image based on the contour map generated.

The local contour calculation unit 25A generates a local contour image based on the contour map generated for each of the plurality of bilateral images.

Next, a description is made about the global contour extraction unit 26A. The smoothed image generation unit 33 acquires a plurality of bilateral images by applying the bilateral filter which changes stepwise the degree of smoothness of the input image P1. The smoothed image generation unit 33 may generate a plurality of bilateral images with the same number of stepwise degrees of smoothness as the number of stepwise degrees provided by the smoothed image generation unit 32, or may generate a plurality of bilateral images with a different number of stepwise degrees of smoothness. The global contour extraction unit 26A may use the plurality of bilateral images output from the smoothed image generation unit 32. In this case, the smoothed image generation unit 33 may not be incorporated.

The saliency map image generation unit 27A generates saliency map images for the plurality of bilateral images, respectively.

The global contour calculation unit 28A generates the contour maps from the saliency maps generated for the plurality of bilateral images, respectively, and generates the global contour image based on the generated contour maps.

(Outline of Operation of Modification)

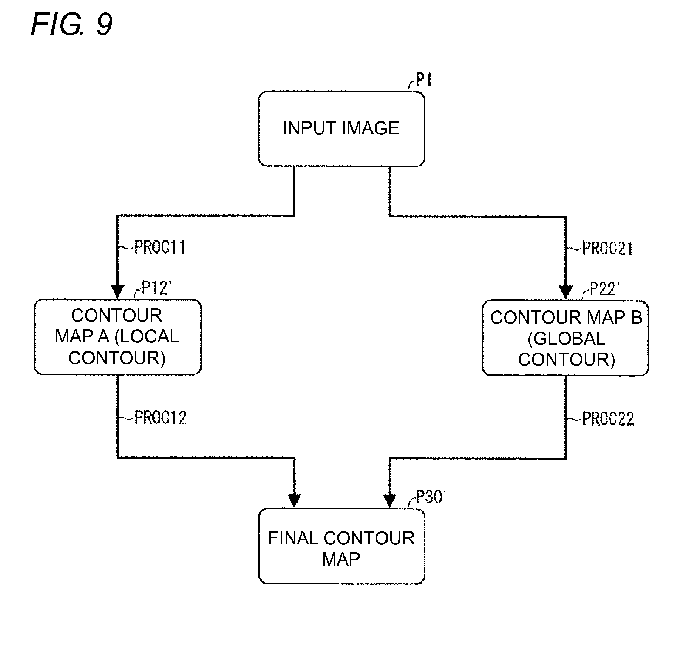

The outline of operation of the modification is described with reference to Fig. 9. Fig. 9 is a diagram illustrating the flow of image map data obtained through each procedure included in a contour extraction process executed by the image processing device 1A according to the modification of the the present modification.

As illustrate in Fig. 9, the image processing device 1A generates a contour map A (hereinbelow, referred to as a local contour P12' (or known as local edge image)) and a contour map B (hereinbelow, referred to as a global contour P22' (or known as saliency edge image)) based on the input image P1. That is, the local contour extraction unit 23A generates the local contour P12' (PROC11), and the global contour calculation unit 28A generates the global contour P22' (PROC21).

The image processing device 1A generates a final contour map P30' (or known as contour image) by using the weighting sum of the local contour P12' and the global contour P22' (PROC 11, PROC22).

In this way, in the present modification, the image processing device 1A generates final contour information by combining local contour information and global contour information.

The contour extraction process of the present modification illustrated in Fig. 9 seems to be the same as the contour extraction process which has been described so far. However, the details ofthe method of generating the local contour P12' and the global contour P22' differ from the contour extraction process which has been described so far. Hereinbelow, the details thereof are described.

[Generation of Global Contour]

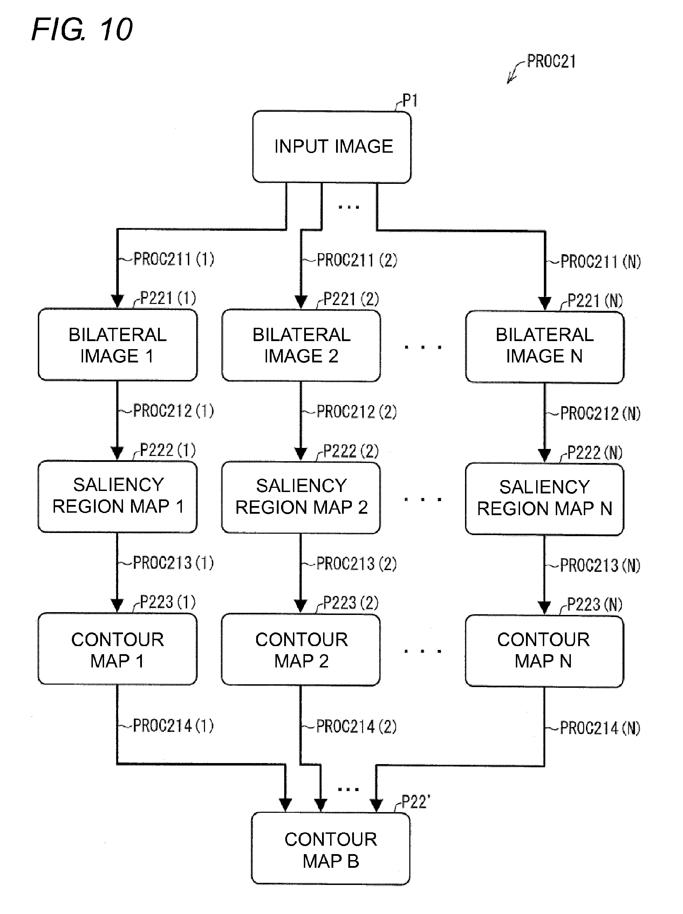

A method of generating the global contour P22' is described with reference to Fig. 10. Fig. 10 is a diagram which concretely illustrates a process PROC21 in which the image processing device 1A generates the global contour P22' from the input image P1.

As illustrated in Fig. 10, first, the smoothed image generation unit 33 generates N (N is an integer of 1 or greater) bilateral images P221(1) to P221(N), to which the bilateral filter for stepwise changing the degree of smoothness is applied, from the input image P1 (PROC221(1) to P221(N)).

Here, the intensity of the filter applied to the bilateral images P221(1) to P221(N) may change from weak to strong, or vice versa. The intensity of the filter used by the smoothed image generation unit 33 can be arbitrarily set by changing a control parameter of the filter.

When the intensity of the filter is weak, neither the edge with a strong intensity nor the edge with a weak intensity are smoothed but both of them remain in the bilateral images. Conversely, when the intensity of the filter is strong, the edge with a weak intensity is smoothed but the edge with a strong intensity remains in the bilateral images.

That is, in this way, the edges with intensities corresponding to the intensities of the filters of respective stages are included in the bilateral images P221(1) to P221(N) obtained by applying the bilateral filter while strengthening the intensity of the filter stepwise.

Next, the saliency map image generation unit 27A generates saliency region maps P222(1) to P222(N) for the bilateral images P221(1) to P221(N), respectively (PROC222(1) to PROC222(N)). Since a method in which the saliency map image generation unit 27A generates the saliency region maps P222 is the same as the method in which the saliency map image generation unit 27 generates the saliency map image, a description about the method is not given again.

Next, the global contour calculation unit 28A generates contour maps P223(1) to P223(N) for the saliency region maps P222(1) to P222(N), respectively (PROC223(1) to PROC223(N)).

The global contour calculation unit 28A can generate the contour maps P223(1) to P223 (N) by performing the contrast computation etc. on the saliency region maps P222(1) to P222 (N), respectively.

Furthermore, the global contour calculation unit 28A generates the global contour P22' by using the weighting sum of the contour maps P223(1) to P223(N) (PROC214(1) to PROC214(N)). The weighting factor which the global contour calculation unit 28A uses to obtain the weighting sum can be arbitrarily set. For example, the value corresponding to the filter intensity can be set as the weighting factor. As the weighting factor, a large value may be set according to the filter intensity applied, or conversely a small value may be set according to the filter intensity applied.

[Generation of Local Contour]

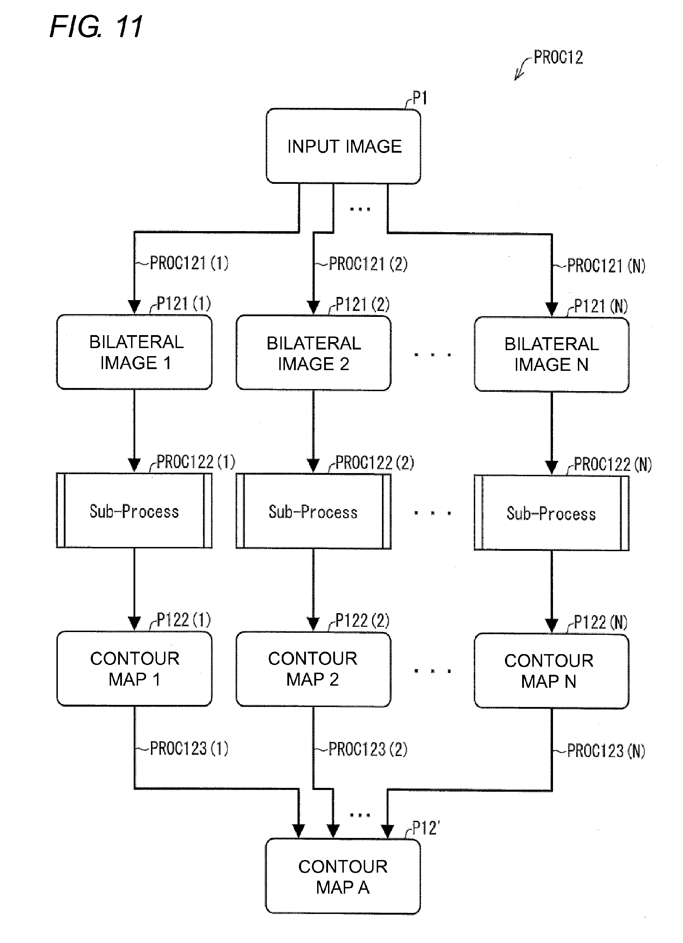

The method of generating the local contour P12' is described with reference to Fig. 11. Fig. 11 is a diagram which concretely illustrates a process PROC11 in which the image processing device 1A generates the local contour P12' from the input image P1.

As illustrated in Fig. 11, first, the smoothed image generation unit 32 generates N (N is an integer of 1 or greater) bilateral images P121(1) to P121(N), to which the bilateral filter for changing stepwise the degree of smoothness is applied, from the input image P1 (PROC121(1) to P121(N)). A method in which the smoothed image generation unit 32 generates the bilateral images is the same as the method which is described in connection with smoothed image generation unit 33, a description about the method is not given again. However, the smoothed image generation unit 32 can use a filter parameter (filter intensity) different from the filter parameter (filter intensity) used by the smoothed image generation unit 33. The smoothed image generation unit 32 may generate a different number of the bilateral images from the number of bilateral images generated by the smoothed image generation unit 33.

Next, the image generation units 24A for respective color channels generate the contour maps P122(1) to P122 (N) for the bilateral images P121(1) to P121(N), respectively (PROC122(1) to PROC122(N)). The details of Sub-Processes PROC122(1) to PROC122 (N) which generate the contour maps P122(1) to P122(N) from the bilateral images P121(1) to P121(N) are described below.

Next, the local contour calculation unit 25A generates the local contours P12' by using the weighting sum of the contour maps P122(1) to P122 (N) (PROC123(1) to PROC123(N)). The processes PROC123(1) to PROC123(N) executed by the local contour calculation unit 25A are the same as the processes PROC214(1) to PROC214(N) executed by the global contour calculation unit 28A except that the input contour maps differ.

[Details of Sub-Process]

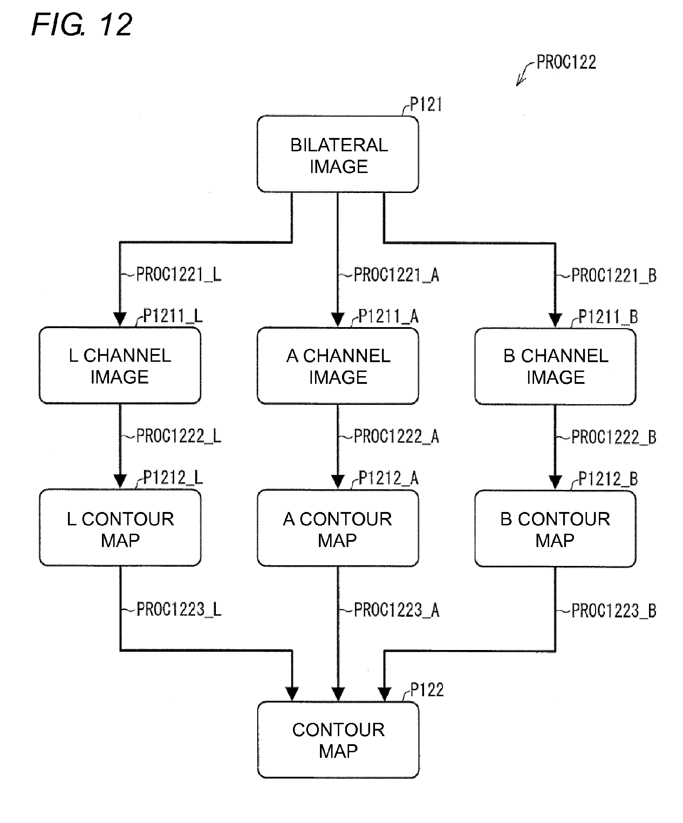

The sub-processes executed by the image generation units 24A for respective color channels are described in detail with reference to Fig. 12. Hereinbelow, a configuration in which the image generation units 24A for respective color channels decompose image components of the bilateral image P121 as an input into respective channels of luminosity L and color difference components A and B is described. However, the invention is not limited to this configuration but the image generation unit 24A for each color channel may decompose the bilateral image P121 serving as an input into channels in expression (color space) of arbitrary colors. For example, the image generation unit 24A for each color can decompose the bilateral image P121 into R, G, and B channels in the RGB color space.

The image generation unit 24A for each color channel generates an L channel image P1221_L, an A channel image P1221_A, and a B channel image P1221_B by decomposing the image components of the bilateral image P121 into L, A, and B channels (PROC1221_L, PROC1221_A, and PROC1221_B).

Next, the local contour calculation unit 25A generates an L contour map P1212_L, an A contour map P1212_A, and a B contour map P1212_B for the L channel image P1221_L, the A channel image P1221_A, and the B channel image P1221_B, respectively (PROC1222_L, PROC1222_A, and PROC1222_B).

It should be noted, the local contour calculation unit 25A generates the L contour map P1212_L, the A contour map P1212_A, and the B contour map P1212_B for the L channel image P1221_L, the A channel image P1221_A, and the B channel image P1221_B, respectively by executing the above-described contrast computation.

Furthermore, the local contour calculation unit 25A generates the contour map P122 corresponding to the input bilateral image P121 by using weighting sum of the L contour map P1212_L, the A contour map P1212_A, and the B contour map P1212_B (PROC1223_L, PROC1223_A, and PROC1223_B). The local contour calculation unit 25A can arbitrarily set the weighting factor for the weighting sum.

In addition, the configuration in which stepwise smoothed images are used in both of the process (PROC11) of generating the local contour P12' and the process (PROC22) of generating the global contour P22' is described. However, the configuration in which the stepwise smoothed images are used in either one ofthe process (PROC11) of generating the local contour P12' and the process (PROC22) of generating the global contour P22' is also possible.

The present invention is not limited to the above described embodiments, but may be changed in various ways within a scope of the claims, and embodiments obtained by suitably combining technical means disclosed in different embodiments may be included in the technical scope of the present invention.

[Implementation by software]

Lastly, each block of the image processing device 1 and 1A, especially the contour detection unit 21 and the contour detection unit 21A, may be implemented as hardware using a logic circuit formed on an integrated circuit (IC chip), or may be implemented as software using a CPU (Central Processing Unit).

In the latter case, the image processing device 1 includes a CPU which executes commands of a program which implements each function, a ROM (Read Only Memory) in which the program is stored, a RAM (Random Access Memory) into which the program is developed, a storage device (recording medium) such as a memory in which the program and various data are stored, etc. The object of the present invention also can be achieved in a manner that a recording medium in which program codes (an executable program, an intermediate code program, or a source program) of a control program of the image processing device 1, which are software to execute the above functions, are recorded in a computer-readable manner is provided in the image processing device 1 and that a computer (or a CPU or an MPU) reads and executes the program codes recorded in the recording medium.

As the recording medium, a non-transitory tangible medium, for example, a tape system such as a magnetic tape and a cassette tape, a disk system including magnetic disks such as a floppy (registered trademark) disk and a hard disk and optical discs such as a CD-ROM, an MO, an MD, a DVD, and a CD-R, a card system such as an IC card (including a memory card) and an optical card, a semiconductor memory system such as a mask ROM, an EPROM, an EEPROM (registered trademark), and a flash ROM, or a logic circuit system such as a PLD (Programmable Logic Device) and an FPGA (Field Programmable Gate array) may be used.

The image processing device 1 may be configured to be connectable to a communication network and the program code may be supplied via the communication network. The communication network may not be particularly limited as long as it can transmit a program code. For example, Internet, INTRANET, EXTRANET, LAN, ISDN, VAN, a CATV communication network, a virtual private network, a telephone network, a mobile communication network, a satellite communication network, etc may be used as the communication network. The transmission medium which constitutes this communication network is also not limited to a specific configuration or a specific kind as long as it can transmit a program code. For example, it may be a wired medium such as IEEE1394, USB, a power line carrier, a cable TV line, a telephone cable, and an ADSL (Asymmetric Digital Subscriber Line) line; or a wireless medium such as an Infrared ray such as IrDA or a remote control, Bluetooth (registered trademark), IEEE802.11 radio, HDR (High Data Rate), NFC (Near Field Communication), DLNA (Digital Living Network Alliance), a mobile telephone network, a satellite connection, and a terrestrial digital network. Embodiments of the present invention may be implemented in the form of computer data signals carried on carrier waves, which are embodied by electronic transmission of the program code.

Since embodiments of the present invention can be used for contour detection of an object shown in an image, the embodiments of the present invention can be suitably used for a digital image apparatus, such as a printer, a scanner, a digital camera, a digital television set, a smart phone, and a personal computer, and for a security system using the contour detection technology.

More information on embodiments of the invention are provided as follows. In accordance with one aspect of at least one embodiment of the invention, there is provided an image processing device for generating a contour image showing a contour of an object shown in an input image, the image processing device comprising: a local edge image generator configured to generate a local edge image showing a local edge of the object in the input image based on contrast between a region in the input image and a region adjacent to the region; a saliency edge image generator configured to generate a contrast map image showing a salient region within the input image and generate a saliency edge image showing an edge included in the generated contrast map image; and a contour image generator configured to generate the contour image by combining the local edge image and the saliency edge image.

In accordance with another aspect of at least one embodiment of the invention, there is provided a non-transitory computer-readable medium, having stored thereon computer-readable instructions for executing, by a computer, an image processing method for generating a contour image showing a contour of an object shown in an input image, the image processing method comprising:

generating a local edge image showing a local edge of the input image based on contrast between a region in the input image and a region adjacent to the region; generating a contrast map image showing a salient region within the input image and generating a saliency edge image showing an edge included in the generated contrast map image; and generating the contour image by combining the local edge image and the saliency edge image.

In accordance with yet another aspect of at least one embodiment of the invention, there is provided An image processing method for generating a contour image showing a contour of an object shown in an input image, the image processing method comprising: generating a local edge image showing a local edge of the object in the input image based on contrast between a region in the input image and a region adjacent to the region; generating a contrast map image showing a salient region within the input image and generating a saliency edge image showing an edge included in the generated contrast map image; and generating the contour image by combining the local edge image and the saliency edge image.

According to the at least one embodiment, the local edge image showing a local edge of the input image is generated based on contrast between a region in the input image and a region adjacent to the region. Here, the region in the input image may include one pixel, or may include a plurality of pixels. The same may be applied to the adjacent area.

For example, the local edge image can be generated by computing a difference value between contrast of a certain pixel within the input image, and contrast of an adjacent pixel located within a predetermined range from the pixel.

An example of executing local edge calculation for one pixel is described hereinafter. However, the same is also applied to a case where the edge calculation is executed for one region.

For example, the local edge image can be obtained by setting pixels in the input image pixel by pixel as an observation pixel in a predetermined order and computing the local edge based on contrast of a pixel (adjacent pixel) located within a predetermined range from the observation pixel. Here, the term "local edge" means an edge obtained using the adjacent pixel of the observation pixel.

Illustratively, the local edge calculation is performed by performing contrast computation on an upper adjacent pixel which is adjacently located on the upper side of the observation pixel and a lower adjacent pixel which is adjacently located on of a lower side of the observation pixel, or contrast computation on a right adjacent pixel which is adjacently located on a right side of the observation pixel and a left adjacent pixel which is adjacently located on a left side of the observation pixel. It is possible to detect presence and absence of an edge along a horizontal direction from the former contrast computation and detect presence and absence of an edge along a vertical direction from the latter contrast computation.

The contrast computation calculates a differential in the contrast between the adjacent pixels and the observation pixel. When calculating the differential in the contrast between the observation pixel and the adjacent pixels in the contrast computation, a probability that an edge exists in the observation pixel is determined to be increased as the differential is increased, and that the probability that an edge exists in the observation pixel is determined to be decreased as the differential is decreased.

Without limitation, pixels located in a diagonal direction of the observation pixel and two or more pixels may be used, and an arbitrary edge computation technique is used.

The term "contrast" which is the target of the contrast computation can be defined from various viewpoints. As the "contrast", a value which represents a gray scale of an image can be used, for example. It is not restricted to this, but a method of definition is arbitrary. For example, a value of each channel of an image can be used as the contrast.

In the at least one embodiment, the contrast map image shows the salient region within the input image. Furthermore, visual saliency in the input image represents a degree by which a predetermined region within the input image would visually attract attention of a human being. An arbitrary contrast map image generation technique can be used.

That is, the contrast map image generation method may be a method based on the local contrast or a method based on the global contrast.

The method based on the local contrast calculates saliency with use of a differential between an image region and a relatively small adjacent region.

On the other hand, the method based on the global contrast is a method of evaluating saliency by measuring a difference between an image region and the entire image.

In the at least one embodiment, the saliency edge image comprising a contrast map image showing an edge is generated by generating the contrast map image to show a salient region within the input image.

According to the at least one embodiment, the contour image is generated by combining the local edge image generated in the way described above and the saliency edge image.

As a technique of combining the local edge image and the saliency edge image, for example, a method of the weighting sum is used. The contour image may be a mapping image which shows a possibility that a contour exists.

Therefore, according to the at least one embodiment, by referring edge information according to the saliency of the image as well as the local edge information, the contour in which human being's visual characteristic is reflected can be detected with more sufficient accuracy.

As a result, the effect of eliminating a noise edge from the local edge information and obtaining the contour image in which the contour of an important object is enhanced is obtained.

The image processing method may be achieved with use of a computer. In this case, an image processing program which causes a computer to execute each step of the image processing method by executing processing including each of the steps in the computer, and a computer-readable recording medium storing the image processing program fall within the scope of the invention.

In the image processing device according to an embodiment of present invention, for the plurality of regions in the input image, the saliency edge image generator calculates contrast between each region and the entire input image, and generates the contrast map images of the plurality of regions with respect to the entire input image respectively.

For the plurality of regions in the input image, the saliency edge image generator calculates the contrast between each region and the entire input image, and generates the contrast map images of the plurality of regions with respect to the entire input image respectively.

The contrast map images of the plurality of regions with respect to the entire input image show so-called global visual saliency of an image. For example, for the plurality of regions in the input image, the contrast map can be obtained by calculating saliency of each of the plurality of regions with respect to the entire input image based on the differential in contrast between one region and the other regions among the plurality of regions.

The saliency edge image obtained by this is so-called global edge image representing global saliency. Therefore, the saliency edge image generator in the embodiment may also be called a global edge image generator.

The saliency edge image is generated based on the visual saliency of each of the plurality of regions in the input image with respect to the whole input image. Specifically, the saliency edge image can be generated based on mapping of the saliency calculated for each region. That is, the saliency edge image can be generated by performing contrast computation on a saliency value representing an intensity of the calculated saliency for each region.

As a result, by using information of the global visual saliency of an image, the effect of eliminating a noise edge from the local edge information and obtaining the contour image in which the contour of an important object is enhanced is obtained.

In the image processing device according to an embodiment of the present invention, for two sub-regions obtained by segmenting a region of a predetermined size or range in a predetermined direction, preferably the local edge image generator generates the local edge image by using a difference value obtained by computing a difference between a dominant color of one of the sub-region and a dominant color of the other sub-region.

According to the embodiment, the local edge image can be generated according to the difference in the dominant color between the two sub-regions.

The dominant color can be defined as a color which more frequently occurs in a histogram when the histogram is computed for colors of pixels in each sub-region. The term "color" here means a color expressed on a color space. Therefore, objects to calculate the histogram may be a value of Y channel in a $YC_b C_r$ color space, or may be a value of a $C_b$ channel or a $C_r$ channel.

The term "difference in dominant color between two sub-regions" may mean a distance between the colors on the color space.

In the embodiment, the region of the predetermined size or range can be arbitrarily set. For example, the region corresponding to each of the plurality of regions used when generating the contrast map can be used as the region of the predetermined range. The region of the predetermined size or range may be a rectangular region configured by pixels within the predetermined size or range in a height direction (vertical direction) and a width direction (horizontal direction) when the observation pixel is a center pixel.

A method of segmenting the region in the predetermined direction can be an arbitrary segmentation method. That is, the region can be segmented by a linear line extending along a vertical direction and passing through the center pixel, or a linear line extending along a horizontal direction and passing through the center pixel. For example, when segmenting the region by the linear line extending along the vertical direction, left and right sub-regions are obtained using a line of the vertical direction as a boundary.

As the difference in the dominant color between two sub-regions is increased, the possibility that the edge (contour) exists in the region is increased. When segmenting the region by a linear line extending in the vertical direction, as the difference in the dominant color between left and right sub-regions obtained by segmentation is increased, the possibility that the edge along the vertical direction is increased.

According to at least one embodiment, the edge can be more accurately extracted by using the difference in the dominant color between the two sub-regions.

In the image processing device according to an embodiment of the present invention, the local edge image generator preferably generates the local edge image by using a result obtained by multiplying the difference and a value, which is obtained by multiplying a dominance of the dominant color of one sub-region and a dominance of the dominant color of the other sub-region with respect to the two sub-regions.

According to the embodiment, the local edge image in which the dominance of the dominant color in each sub-region of the two sub-regions is reflected can be generated.

The dominant color in the embodiment is as described above. The term "dominance of the dominant color" means an intensity (how strongly dominant) of the dominant color with respect to the other colors in the region. The dominance of the dominant color can be expressed by a frequency of the dominant color in the histogram described above, for example.

When the dominance of the dominant color of the region is high, the region approximates one color.

When each of the two sub-regions approximates one color, the possibility that the contour exists in the region (especially, in the observation pixel and the adjacent pixels) is high.

According to the embodiment, by using the dominance of the dominant color in each of the two sub-regions as well as the difference in the dominant color between the two sub-regions, the edge can be more accurately extracted.

The image processing device according to an embodiment of the present invention, the input image is subjected to stepwise smoothing to obtain a plurality of smoothed images, and preferably the saliency edge image generator is configured to calculate contrast between each region of a plurality of regions in each smoothed image and the entire smoothed image, generate a contrast map image for each smoothed image, generate an edge image showing an edge included in the generated contrast map image, and generate the saliency edge image by combining the edge images generated for each of the plurality of smoothed images.

A plurality of smoothed images which are stepwise smoothed are images of different degrees of smoothness which are obtained by smoothing an original image while changing stepwise a parameter which controls a degree of smoothness of a smoothing filter.

For this reason, the edge according to the degree of smoothness remains in the plurality of smoothed images. That is, a smoothed image with a small degree of smoothness (obtained by using a weak smoothing filter) includes not only an edge with a large intensity but also an edge with a small intensity. On the other hand, since the edge with a small intensity is completely smoothed, only the edge with a large intensity remains in the smoothed image with a large degree of smoothness (a strong smoothing filter).

According to the embodiment, for the plurality of regions in each smoothed image, the contrast between each region and the entire smoothed image is calculated, the contrast map images for all the smoothed images are generated respectively, and the edge image showing the edge in the generated contrast map is generated. The saliency edge image is generated by combining the edge images showing the edge based on the saliency thus obtained (for example, by computing the weighting sum).

According to the embodiment, since an image showing the edge based on the saliency of the smoothed image according to the intensity of the edge can be generated, improvement of the accuracy of the edge extraction can be achieved.

In the image processing device according to an embodiment of the present invention, the input image is subjected to stepwise smoothing to obtain a plurality of smoothed images, and the local edge image generator preferably generates an edge image showing a local edge of the object in each smoothed image based on contrast between a region in the smoothed image and a region adjacent to the region, and generates the local edge image by combining the edge images generated for the plurality of smoothed images.

The plurality of smoothed images obtained by stepwise smoothing are as described above. According to the embodiment, for each of the plurality of smoothed images including an edge according to the degree of smoothness, an image showing the local edge of the smoothed image is generated based on the contrast between the region in the smoothed image and pixels adjacent to the region. The local edge image is generated by combining the local edge images of the plurality of smoothed images thus obtained (for example, by computing the weighting sum).

According to the embodiment, since the image showing the local edge of the smoothed image according to the intensity of the edge can be generated, improvement of the accuracy of the edge extraction can be achieved.

In the image processing device according to an embodiment of the present invention, when generating the edge image showing the local edge o the smoothed image based on the contrast between the region in the smoothed image and the region adjacent to the region, preferably the local edge image generator generates color channel edge images which are edge images obtained by executing contrast computation for each color channel of the smoothed image, and generates a local edge image of the smoothed image by combining the color channel edge images generated for the respective color channels.

According to the embodiment, since the contrast is computed for each color channel, improvement of the accuracy of the edge extraction can be achieved.

In the image processing device according to an embodiment of the present invention, preferably the smoothed image is obtained by performing smoothing using a bilateral filter.

According to the embodiment, since it is possible to smooth portions other than an edge while making a portion corresponding to the edge clear by using the bilateral filter, improvement of the accuracy of the edge extraction can be achieved.

Based on the foregoing, the effect of eliminating a noise edge from local edge information and obtaining a contour image in which a contour of an important object is enhanced may be obtained.

**Claims**

1. An image processing device (1) for generating a contour image (P30, P30') showing a contour of an object shown in an input image (P1), the image processing device (1) comprising:

   a local edge image generator (23, 23A) configured to generate a local edge image (P12, P12') showing a local edge of the input image (P1) based on contrast between a region in the input image (P1) and a region adjacent to the region;
   a saliency edge image generator (26, 26A) configured to generate a contrast map image showing a salient region within the input image (P1) and generate a saliency edge image (P22, P22') showing an edge included in the generated contrast map image ; and
   a contour image generator (29) configured to generate the contour image (P30, P30') by combining the local edge image (P12, P12') and the saliency edge image (P22).

2. The image processing device (1) according to claim 1 or 2, wherein, for a plurality of regions in the input image (P1), the saliency edge image generator (26, 26A) is configured to calculate contrast between each of the plurality of regions in the input image (P1) and the entire input image, and is configured to generate a contrast map image for each of the plurality of regions respectively.

3. The image processing device (1) according to claim 1, wherein when a predetermined region in the input image (P1) is segmented into two sub-regions,
   the local edge image generator (23, 23A) is configured to generate the local edge image (P12, P12') by using a difference value obtained by computing difference between a dominant color of one of the sub-regions and a dominant color of the other sub-region.

4. The image processing device (1) according to claim 3, wherein the local edge image generator (23, 23A) is configured to generate the local edge image (P12, P12') by using a result obtained by multiplying the difference value with a second value, and the second value is obtained by multiplying a dominance of the dominant color of one of the sub-regions with a dominance of the dominant color of the other sub-region.

5. The image processing device (1) according to any one of claims 1 to 4, wherein the input image (P1) is subjected to stepwise smoothing to obtain a plurality of smoothed images,
   the saliency edge image generator (26, 26A) is configured to calculate contrast between each region of a plurality of regions in each smoothed image and the entire smoothed image, generate a contrast map image for each smoothed image, generate an edge image showing an edge included in the generated contrast map image, and generate the saliency edge image by combining the edge images generated for each of the plurality of smoothed images.

6. The image processing device according to any one of claims 1 to 4, wherein the input image (P1) is subjected to stepwise smoothing to obtain a plurality of smoothed images, the local edge image generator (23, 23A) is configured to generate an edge image showing a local edge of each smoothed image based on contrast between a region in the smoothed image and a region adjacent to the region in the smoothed image, and generate the local edge image (P12) by combining the edge images generated for each of the plurality of smoothed images.

7. The image processing device (P1) according to claim 6, wherein when generating the edge image showing the local edge of each smoothed image based on the contrast between the region in the smoothed image and the region adjacent to the region, the local edge image generator (23, 23A) is configured to generate color channel edge images which are edge images obtained by executing contrast computation for each color channel of the smoothed image, and generate a local edge image of the smoothed image by combining the color channel edge images generated for the respective color channels.

8. The image processing device (1) according to any one of claims 5 to 7, wherein each smoothed image is an image obtained by performing smoothing using a bilateral filter.

9. A non-transitory computer-readable medium, having stored thereon computer-readable instructions for executing, by a computer, an image processing method for generating a contour image (P30, P30') showing a contour of an object shown in an input image (P1), the image processing method comprising:

generating a local edge image (P12, P12') showing a local edge ofthe input image (P1) based on contrast between a region in the input image (P1) and a region adjacent to the region (S12);
generating a saliency edge image (P22, P22') comprising a contrast map image showing a salient region within the input image (P1) and generating a saliency edge image (P22, P22') showing an edge included in the generated contrast map image (S22); and
generating the contour image (P30, P30') by combining the local edge image (P12) and the saliency edge image (P22, P22').

10. An image processing method for generating a contour image (P30, P30') showing a contour of an object shown in an input image (P1), the image processing method comprising:

generating a local edge image (P12, P12') showing a local edge of the object in the input image based on contrast between a region in the input image (P1) and a region adjacent to the region (S12);
generating a saliency edge image (P22, P22') comprising a contrast map image showing a salient region within the input image (P1) and generating a saliency edge image (P22, P22') showing an edge included in the generated contrast map image (S22); and
generating the contour image (P30, P30') by combining the local edge image (P12, P12') and the saliency edge image (P22, P22').

## FIG. 1

IMAGE PROCESSING DEVICE — 1

OPERATION UNIT — 41

CONTROL UNIT — 20

CONTOUR DETECTION UNIT — 21

INPUT IMAGE — P1

INPUT IMAGE ACQUIRING UNIT — 22

LOCAL CONTOUR EXTRACTION UNIT — 23

GLOBAL CONTOUR EXTRACTION UNIT — 26

GRAY SCALE IMAGE GENERATION UNIT — 24

SALIENCY MAP IMAGE GENERATION UNIT — 27

LOCAL EDGE COMPUTATION UNIT — 25

GLOBAL EDGE COMPUTATION UNIT — 28

WEIGHTING SUM COMPUTATION UNIT — 29

CONTOUR IMAGE OUTPUT UNIT — 30

IMAGE APPLICATION — 31

STORAGE UNIT — 10

DISPLAY UNIT — 42

17

## FIG. 2

INPUT IMAGE

27

SALIENCY MAP IMAGE
GENERATION UNIT

271

REGION SEGMENTING
UNIT

272

SALIENCY VALUE
CALCULATION UNIT

SALIENCY MAP IMAGE

## FIG. 3A

P1

## FIG. 3B

P21

a. INPUT ONE IMAGE

b. SEGMENT IMAGE INTO REGIONAL BLOCKS

c. CALCULATE SALIENCY OF REGION

FIG. 4A

FIG. 4B

FIG. 4C

EP 2 709 063 A1

## FIG. 5

## FIG. 6A

dominance L

dominant color L

## FIG. 6B

dominance R

dominant color R

*FIG. 7*

START

ACQUIRE INPUT IMAGE — S10

P1

GENERATE GRAY SCALE IMAGE — S11

P11

GENERATE LOCAL EDGE IMAGE THROUGH CONTRAST COMPUTATION — S12

P12

GENERATE SALIENCY MAP IMAGE — S21

P21

GENERATE GLOBAL EDGE IMAGE THROUGH CONTRAST COMPUTATION — S22

P22

GENERATE FINAL CONTOUR IMAGE BY OBTAINING WEIGHTING SUM OF LOCAL EDGE IMAGE AND GLOBAL EDGE IMAGE — S30

P30

END

*FIG. 8*

IMAGE PROCESSING DEVICE ⌐1A

OPERATION UNIT ⌐41

CONTROL UNIT ⌐20A

CONTOUR DETECTION UNIT ⌐21A

INPUT IMAGE ⌐P1 → INPUT IMAGE ACQUIRING UNIT ⌐22

LOCAL CONTOUR EXTRACTION UNIT ⌐23A

SMOOTHED IMAGE GENERATION UNIT ⌐32

IMAGE GENERATION UNIT FOR COLOR CHANNEL ⌐24A

LOCAL CONTOUR COMPUTATION UNIT ⌐25A

GLOBAL CONTOUR EXTRACTION UNIT ⌐26A

SMOOTHED IMAGE GENERATION UNIT ⌐33

SALIENCY MAP IMAGE GENERATION UNIT ⌐27A

GLOBAL CONTOUR COMPUTATION UNIT ⌐28A

WEIGHTING SUM COMPUTATION UNIT ⌐29

CONTOUR IMAGE OUTPUT UNIT ⌐30

IMAGE APPLICATION ⌐31

STORAGE UNIT ⌐10

DISPLAY UNIT ⌐42

## FIG. 9

INPUT IMAGE ~P1

~PROC11

CONTOUR
MAP A (LOCAL
CONTOUR) ~P12'

~PROC12

~PROC21

CONTOUR MAP B
(GLOBAL
CONTOUR) ~P22'

~PROC22

FINAL CONTOUR
MAP ~P30'

## FIG. 10

*FIG. 11*

PROC12

INPUT IMAGE — P1

... 

PROC121 (1) | PROC121 (2) | PROC121 (N)

BILATERAL IMAGE 1 — P121 (1)   BILATERAL IMAGE 2 — P121 (2) . . . BILATERAL IMAGE N — P121 (N)

PROC122 (1) | PROC122 (2) | PROC122 (N)

Sub-Process | Sub-Process . . . Sub-Process

P122 (1) | P122 (2) | P122 (N)

CONTOUR MAP 1   CONTOUR MAP 2 . . . CONTOUR MAP N

PROC123 (1) | PROC123 (2) | PROC123 (N)

...

CONTOUR MAP A — P12'

## FIG. 12

EUROPEAN SEARCH REPORT

Application Number

EP 13 18 3786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FENG S ET AL: "Attention-driven salient edge(s) and region(s) extraction with application to CBIR", SIGNAL PROCESSING, ELSEVIER SCIENCE PUBLISHERS B.V. AMSTERDAM, NL, vol. 90, no. 1, 1 January 2010 (2010-01-01), pages 1-15, XP026545027, ISSN: 0165-1684, DOI: 10.1016/J.SIGPRO.2009.05.017 [retrieved on 2009-05-30] * figures 1,5 * * page 3, right-hand column * | 1,2,5-10 | INV. G06T7/00 |
| A | JUN WANG ET AL: "Salient Closed Boundary Extraction with Ratio Contour", TRANSACTIONS ON PATTERN ANALYSIS AND MACHINE INTELLIGENCE, IEEE, PISCATAWAY, USA, vol. 27, no. 4, 1 April 2005 (2005-04-01), pages 546-561, XP011127595, ISSN: 0162-8828, DOI: 10.1109/TPAMI.2005.84 * abstract * | 1-10 | |
| A | ROSIN P L: "Edges: saliency measures and automatic thresholding", MACHINE VISION AND APPLICATIONS, SPRINGER VERLAG, DE, vol. 9, no. 4, 1 January 1997 (1997-01-01), pages 139-159, XP002289332, ISSN: 0932-8092, DOI: 10.1007/S001380050036 * abstract * | 1-10 | |

TECHNICAL FIELDS SEARCHED (IPC)

G06T

-/--

The present search report has been drawn up for all claims

| Place of search | Date of completion of the search | Examiner |
|---|---|---|
| Munich | 5 December 2013 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

Application Number

EP 13 18 3786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANHUAN AO ET AL: "Edge Saliency Map Detection with Texture Suppression", IMAGE AND GRAPHICS (ICIG), 2011 SIXTH INTERNATIONAL CONFERENCE ON, IEEE, 12 August 2011 (2011-08-12), pages 309-313, XP032048585, DOI: 10.1109/ICIG.2011.46 ISBN: 978-1-4577-1560-0 * abstract * ----- | 1-10 | |
| A | PAPARI G ET AL: "Edge and line oriented contour detection: State of the art", IMAGE AND VISION COMPUTING, ELSEVIER, GUILDFORD, GB, vol. 29, no. 2-3, 1 February 2011 (2011-02-01), pages 79-103, XP027542613, ISSN: 0262-8856 [retrieved on 2010-08-27] * abstract * ----- | 1-10 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 5 December 2013 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000011188 A
- JP 2000076468 A
- JP 2007318408 A
- JP 2008205603 A
- JP 5307537 A

**Non-patent literature cited in the description**

- **FELZENSZWALB ; HUTTENLOCHER.** Efficient graph-based image segmentation. *IJCV,* 2004, vol. 59 (2), 167-181